(19) Europäisches Patentamt
European Patent Office
Office européen des brevets

(11) **EP 4 539 395 A1**

(12) **EUROPEAN PATENT APPLICATION**
published in accordance with Art. 153(4) EPC

(43) Date of publication:
**16.04.2025 Bulletin 2025/16**

(21) Application number: **23838593.4**

(22) Date of filing: **06.06.2023**

(51) International Patent Classification (IPC):
***H04L 9/40*** (2022.01)

(52) Cooperative Patent Classification (CPC):
**H04L 9/40**

(86) International application number:
**PCT/CN2023/098611**

(87) International publication number:
**WO 2024/012099 (18.01.2024 Gazette 2024/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.07.2022 CN 202210810455**

(71) Applicant: ZTE Corporation
**Shenzhen, Guangdong 518057 (CN)**

(72) Inventors:
• ZHOU, Na
**Shenzhen, Guangdong 518057 (CN)**
• YAN, Xincheng
**Shenzhen, Guangdong 518057 (CN)**
• JIANG, Zhihong
**Shenzhen, Guangdong 518057 (CN)**

(74) Representative: **Ziebig Hengelhaupt Intellectual
Property Attorneys
Patentanwaltskanzlei PartGmbB
Leipziger Straße 49
10117 Berlin (DE)**

(54) **COMMUNICATION METHOD, AND ELECTRONIC DEVICE AND STORAGE MEDIUM**

(57) Provided in the present application are a communication method, an electronic device and a storage medium. The communication method comprises: generating a check information notification message according to a transmission path for a data message, wherein the check information notification message comprises check information of at least one second communication node in the transmission path (S110); and sending the check information notification message to a first communication node in the transmission path, such that the first communication node adds check information to a data message (S120), wherein the first communication node is an upstream communication node of the second communication node, and the check information is used by the second communication node to verify the data message from the first communication node.

generate a check information notification message according to a transmission path for a data packet, wherein the check information notification message includes check information of at least one second communication node in the transmission path — S110

send the check information notification message to a first communication node in the transmission path, such that the first communication node adds the check information to the data packet — S120

FIG. 1

**Description**

CROSS-REFERENCE TO RELATED APPLICATIONS

The present application is based on, and claims priority to, the Chinese Patent Application No. 202210810455.4, filed on July 11, 2022, the entire content of which is hereby incorporated by reference into the present application.

TECHNICAL FIELD

The present application relates to the technical field of network communication security, and in particular to a communication method, an electronic device and a storage medium.

BACKGROUND

Nowadays, the internet has become an indispensable part of people's daily lives. With the evolution towards cloudification and ubiquitousness of the network, as well as the integration of 2B and 2C services, the exposed surface of network openness continues to increase, further blurring the "boundaries" of network security, while network attack methods continue to escalate. Traditional "patch-based" security design models have the problems such as rigid structures, belated responses, and lack of coordination. The stacked and fortified security architecture, which relies on a passive protection model based on prior knowledge, is unable to meet the demands of new network security protection.

Therefore, how to provide a flexible and efficient communication method that actively defends against network attacks becomes an urgent problem to be addressed.

SUMMARY

Embodiments of the present application provide a communication method, an electronic device, and a computer-readable storage medium.

In a first aspect, an embodiment of the present application provides a communication method, applied to a communication controller, and the method includes: generating a check information notification message according to a transmission path for a data packet, wherein the check information notification message includes check information of at least one second communication node in the transmission path; and sending the check information notification message to a first communication node in the transmission path, such that the first communication node adds the check information to the data packet; wherein the first communication node is an upstream communication node of the second communication node, and the check information is used by the second communication node to verify the data packet from the first communication node.

In a second aspect, an embodiment of the present application provides a communication method, applied to a first communication node, and the method includes: receiving a check information notification message from a communication controller, the check information notification message including check information of at least one second communication node, the second communication node being a downstream communication node of the first communication node in a transmission path for a data packet; adding the check information to the data packet; and sending the data packet added with the check information to the second communication node, to cause the second communication node to verify the data packet according to the check information.

In a third aspect, an embodiment of the present application provides a communication method for a second communication node, and the method includes: receiving a data packet from a first communication node, the data packet carrying check information; verifying the data packet according to the check information; and forwarding the data packet in response to that the data packet passes the verification.

In a fourth aspect, an embodiment of the present application provides an electronic device including a memory, a processor, and a computer program stored on the memory and executable on the processor, the computer program, when executed by the processor, implementing the communication method as provided in any one of the first to third aspects.

In a fifth aspect, an embodiment of the present application provides a computer-readable storage medium having stored thereon a computer program which, when executed by a processor, implements the communication method as provided in any one of the above first to third aspects.

BRIEF DESCRIPTION OF DRAWINGS

FIG. 1 is a flowchart of a communication method according to an embodiment of the present application;

FIG. 2 is a flowchart of a communication method according to another embodiment of the disclosure;

FIG. 3 is a flowchart of a communication method according to another embodiment of the disclosure;

FIG. 4 is a diagram illustrating an implementation environment of a communication method according to an embodiment of the present application;

FIG. 5 is a diagram illustrating an implementation environment of a communication method according to another embodiment of the present disclosure;

FIG. 6 is a diagram illustrating an implementation environment of a communication method according to another embodiment of the present disclosure;

FIG. 7 is a flowchart of a communication method according to another embodiment of the disclosure;

FIG. 8 is a flowchart of a communication method according to another embodiment of the disclosure; and

FIG. 9 is a structural schematic diagram of an electronic device according to an embodiment of the present application.

DETAILED DESCRIPTION

In order to make the objects, technical solutions and advantages of the present application clearer, the present application is further described in detail below with reference to the accompanying drawings and embodiments. It should be understood that the embodiments described herein are merely illustrative of the present application and are not intended to limit the present application.

It should be understood that in the description of embodiments of the present application, references to "first", "second" and the like, if any, are used only for the purpose of distinguishing technical features, and are not to be understood as indicating or implying relative importance or as implying a number of the indicated technical features or as implying a precedence of the indicated technical features. "At least one" means one or more, and "plurality" means two or more. "And/or", describes the association relationship of the associated objects, and indicates that three relationships may exist, e.g., A and/or B, and may indicate the case where A alone exists, A and B simultaneously exist, and B alone exists. Wherein, A and B may be singular or plural. The character "/" generally indicates that a contextual object is an "OR" relationship. "At least one of the following" and similar expressions refer to any group of those items, including any group of single or plural items. For example, at least one of a, b, and c may mean: a, b, c, a and b, a and c, b and c, or, a and b and c, wherein a, b, c may be single or multiple.

Further, technical features related to each embodiment of the present disclosure described below may be combined with each other as long as they do not conflict with each other.

Nowadays, the internet has become an indispensable part of people's daily lives. With the evolution towards cloudification and ubiquitousness of the network, as well as the integration of 2B and 2C services, the exposed surface of network openness continues to increase, further blurring the "boundaries" of network security, while network attack methods continue to escalate. Traditional "patch-based" security design models have the problems such as rigid structures, belated responses, and lack of coordination. The stacked and fortified security architecture, which relies on a passive protection model based on prior knowledge, is unable to meet the demands of new network security protection.

Based on this, the embodiments of the present application provide a communication method, an electronic device and a computer-readable storage medium, which are capable of actively defending against network attacks, thus ensuring network security.

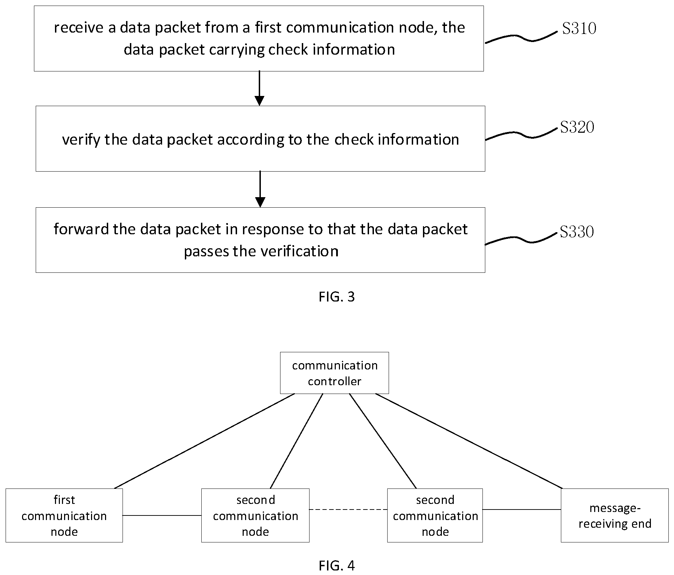

Referring to FIG. 4, it is an implementation environment diagram of a communication method according to an embodiment of the present application. As shown in FIG. 4, an implementation environment of a communication method provided by an embodiment of the present application includes a communication controller, a first communication node, one or more second communication nodes and a message-receiving end. The communication controller is communicatively connected with the first communication node, the one or more second communication nodes and the message-receiving end, respectively. The first communication node is communicatively connected with a second communication node, and a second communication node is communicatively connected with the message-receiving end.

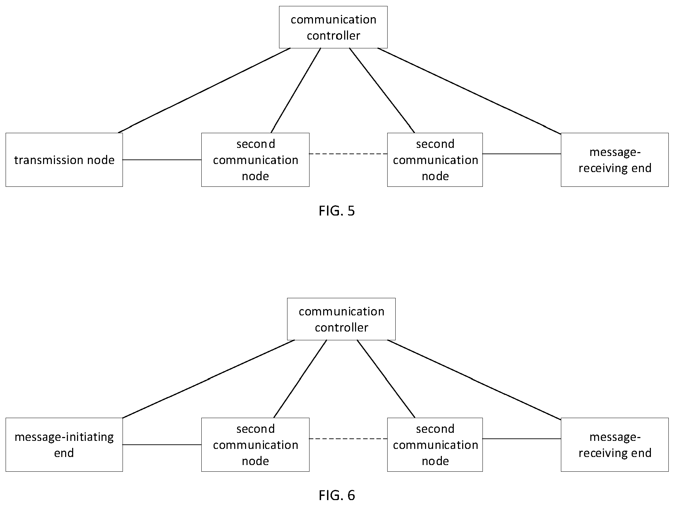

As shown in FIG. 5, an implementation environment diagram of a communication method according to an embodiment of the present application, the first communication node is a transmission node. As shown in FIG. 6, an implementation environment of a communication method according to an embodiment of the present disclosure, the first communication node is a message-initiating end.

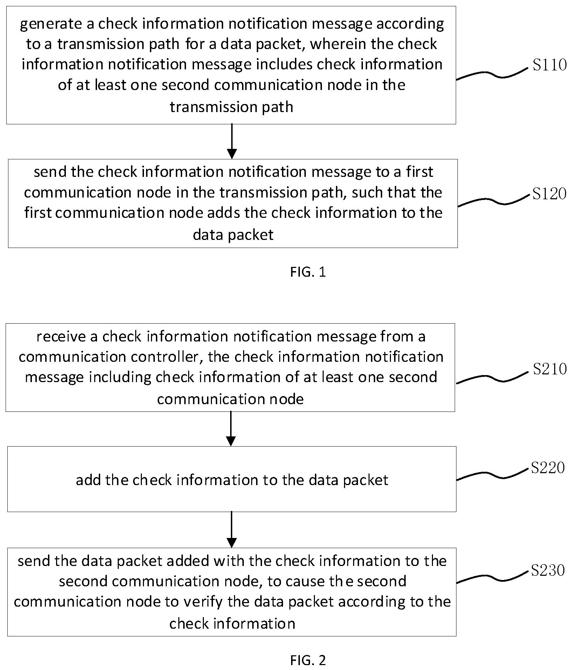

Firstly, a communication method provided by an embodiment of the present application is described. The method is applied to a communication controller. Referring to FIG. 1, a flow schematic diagram of a communication method provided by an embodiment of the present application, the communication method provided by an embodiment of the present application includes but is not limited to steps S110 to S120.

In Step S110, a check information notification message is generated according to a transmission path for a data packet, wherein the check information notification message includes check information of at least one second communication node in the transmission path.

In Step S120, the check information notification message is sent to a first communication node in the transmission path, such that the first communication node adds the check information to the data packet.

Wherein the first communication node is an upstream communication node of the second communication node, and the check information is used by the second communication node to verify the data packet from the first communication node.

It should be noted that, the check information notification message includes check information of at least one second communication node in the transmission path, that is, the data packet is verified by at least one second communication node in the transmission path, and on the one hand, utilizing the communication node to perform legitimacy verification of the data packet in the data transmission plane can protect the message-receiving end and achieve network defense; on the other hand, a minimum of only one second communication node with the verification capability is required to verify the data packet, which can reduce the processing burden on the end-to-end communication system and improve transmission performance based on network defense.

In some embodiments, the method further includes:

a network location of the second communication node is determined according to a service requirement of the data packet.

It can be understood that, the second communication node is a node used for performing message verification in the transmission path, in practice, the network location of the second communication node in the transmission path may be determined according to a service requirement such as an operator requirement or a user requirement of the data packet, i.e. the network location where the message verification is performed is flexibly adjusted, e.g. the verification of the data packet is performed only at the network domain ingress or at both the network domain ingress and egress. In the case of network defense, both excessive defense can be avoided and the service requirements for message transmission can be met.

In some embodiments, the communication controller is a Software Defined Network (SDN) controller.

It can be understood that, if the implementation environment of the communication method provided by the embodiment of the present application is constructed based on a SDN architecture, by taking the SDN controller as a communication controller, it is possible to acquire global network information and centrally manage network devices, thereby improving communication efficiency and applicability.

In one embodiment, as shown in FIG. 5, the first communication node is a transmission node. For the check information included in the check information notification message, in an embodiment, the data packet is transmitted from the transmission node $S'_1$ to the message-receiving end $S_2$ with a transmission path of $[S'_1, A_1, A_2, A_3, A_4, S_2]$, then the second communication nodes $A_2$ and $A_4$ in the transmission path may be selected to verify the data packet, i.e. the check information notification message includes the check information of the second communication nodes $A_2$ and $A_4$ in the transmission path.

In another embodiment, as shown in FIG. 6, the first communication node is a message-initiating end. For the check information included in the check information notification message, in an embodiment, the data packet is transmitted from the message-initiating end $S_1$ to the message-receiving end $S_2$ with a transmission path of $[S_1, A_1, A_2, A_3, A_4, A_5, A_6, S_2]$, then the second communication nodes $A_1$ and $A_6$ in the transmission path may be selected to verify the data packet, i.e. the check information notification message includes the check information of the second communication nodes $A_1$ and $A_6$ in the transmission path.

In some embodiments, prior to step S110, the method further includes:

a check information request from a first communication node is received; and
a transmission path for a data packet is determined according to a source address and a destination address included in the check information request.

In one embodiment, as shown in FIG. 5, the first communication node is a transmission node. It can be understood that, the transmission node, after receiving the data packet sent by the message-initiating end to the message-receiving end, if it is determined that the data packet has no corresponding check information locally, i.e. the data stream has not yet requested check information, sends a check information request to the communication controller, wherein the data packet and the check information request include the source address and the destination address of the data transmission, i.e. the addresses of the message-initiating end and the message-receiving end. After receiving the check information request from the transmission node, the communication controller determines the transmission path for the data packet based on the source address and the destination address included in the check information request.

In an embodiment, a predetermined path planning algorithm is used to determine that there are paths $T_1$, $T_2$, and $T_3$ from the transmission node $S'_1$ to the message-receiving end $S_2$ based on the source address and the destination address included in the check information request, and $T_2$ is selected from the paths $T_1$, $T_2$, and $T_3$ as the transmission path for the data packet.

It can be understood that when the first communication node is a transmission node, the transmission path for the data packet may also be determined based on the address of the transmission node and the destination address included in the check information request.

In another embodiment, as shown in FIG. 6, the first communication node is a message-initiating end. It can be understood that, prior to the message-initiating end sends the data packet, if it is determined that the data packet has no corresponding check information locally, i.e. the data stream is a new stream and no check information has yet been requested, a check information request is sent to the communication controller, wherein the data packet and the check information request include the source address and the destination address of the data transmission, i.e. the addresses of the message-initiating end and the message-receiving end. The communication controller, after receiving the check information request from the message-initiating end, determines the transmission path for the data packet based on the source address and the destination address included in the check information request.

In an embodiment, a predetermined path planning algorithm is used to determine that there are paths $T_1$ and $T_2$ from the message-initiating end $S_1$ to the message-receiving end $S_2$ based on the source address and the destination address included in the check information request, and $T_1$ is selected from the paths $T_1$ and $T_2$ as the transmission path for the data packet.

It can also be understood that the message-initiating end may send the check information request through an authentication process. For an application scenario of service authentication, for example, a user first arrives at a management network element of an enterprise for authentication, and then performs a service communication process of the enterprise. Wherein the management network element of the enterprise, upon obtaining the authentication request message of the user, sends a check information request to the communication controller to cause the communication controller to return a check information notification message based on the check information request, and the management network element of the enterprise returns an authentication response message carrying the check information notification message to the user.

In some embodiments, prior to the determining the transmission path for the data packet according to the source address and the destination address included in the check information request, the method further includes:

node information from a second communication node is received; and
the determining the transmission path for the data packet according to the source address and the destination address included in the check information request includes:

a transmission path for a data packet is determined based on the node information and a source address and a destination address included in the check information request;
wherein the node information includes a node link state and whether a verification function is supported.

It can be understood that, prior to determining the transmission path, node information such as the node link state and whether a verification function is supported or not uploaded by the second communication node is received, so that the transmission path for the data packet is determined based on the node information and the source address and the destination address included in the check information request. In some embodiments, the transmission path supporting the verification function may be determined from the transmission node connecting the message-initiating end and the message-receiving end according to the node link state and a predetermined path planning algorithm.

In an embodiment, the check information request includes a source address and a destination address, which characterize that the data packet is to be sent from the message-initiating end $S_1$ to the message-receiving end $S_2$, and the predetermined path planning algorithm is used to determine that there are paths $T_1$, $T_2$, and $T_3$ from the message-initiating end $S_1$ to the message-receiving end $S_2$ based on the source address and the destination address. Based on whether the node in the transmission paths supports the verification function and the link load state of the transmission path, it is determined that there is a second communication node that supports the verification function, and the path $T_2$ with a lower link load is taken as the transmission path for the data packet.

It can be understood that, the check information notification message including the check information is generated according to the transmission path for the data packet, in an embodiment, the transmission path for the data packet is $[S_1, A_1, A_2, A_3, A_4, A_5, A_6, S_2]$, the transmission path characterizes a path from the message-initiating end $S_1$ to the message-receiving end $S_2$, through the second communication nodes $[A_1, A_2, A_3, A_4, A_5, A_6]$, the second communication node $A_1$ in the transmission path may then be selected to verify the data packet. Subsequently, the source address and destination address in the transmission path, i.e., the source address of the data packet (the address of the message-initiating end $S_1$) and the destination address (the address of the message-receiving end $S_2$), are calculated and combined to obtain the check information of the second communication node $A_1$.

In some embodiments, prior to the second communication node verifies the data packet according to the check information, the second communication node generates node verification information according to the source address and the destination address included by the data packet, and verifies the data packet according to the node verification information and the check information.

It should be understood that the communication controller and the second communication node respectively obtain the node verification information and the check information by means of the same calculation rule, and in the verification of the data packet, the data packet is considered to pass the verification if the node verification information is identical to the check information carried in the data packet.

In some embodiments, the node information further includes a node port, and the generating the check information notification message according to the transmission path for the data packet includes:

the check information notification message is generated according to the node port and the transmission path for the data packet.

It can be understood that, the check information notification message including the check information is generated based on the node port and the transmission path for the data packet, in an embodiment, the transmission path for the data packet is $[S_1, A_1, A_2, A_3, A_4, S_2]$, the transmission path characterizes a path from the message-initiating end $S_1$ to the message-receiving end $S_2$, through the second communication nodes $[A_1, A_2, A_3, A_4]$, the second communication nodes $A_1$ and $A_4$ in the transmission path may then be selected to verify the data packet, that is, the check information notification message includes the second communication nodes $A_1$ and $A_4$ in the transmission path, so that the node ports of the second communication nodes $A_1$ and $A_4$ and the source address and the destination address in the transmission path are calculated using a predetermined cryptographic algorithm, and the calculation result is taken as the check information.

It should be noted that the check information is generated based on the node port, the source address, and the destination address of the data packet, so that different second communication nodes correspond to different check information, which can further enhance the network security.

It should also be noted that if the first communication node is the message-initiating end, the determination can also be based on the address of the message-initiating end and the node port of the last second communication node in the transmission path; if the second communication node is a transmission node, the determination can also be based on the transmission node and the node port of the last second communication node in the transmission path.

It should also be noted that the check information can include a certificate, capability, a verification code, a token, or the like.

It should be understood that as long as the second communication node can use the check information to verify the data packet, the present application embodiment does not place specific restrictions on the way in which the check information is generated or its form.

In one embodiment, the check information notification message includes the address of the message-receiving end and the node address and the check information of at least one second communication node in the transmission path.

It should be noted that the address of the message-receiving end is also the destination address of the data packet. After the first communication node receives the check information notification message from the communication controller, it records the correspondence between the address of the message-receiving end, the node address and the check information of the second communication node. Thus, based on the destination address carried in the data packet to be sent, which is also the address of the message-receiving end, the first communication node acquires the corresponding check information from the recorded information and adds the node address and the check information of the second communication node to the data packet.

In another embodiment, the check information notification message includes the address of the message-initiating end, the address of the message-receiving end and the node address and the check information of at least one second communication node in the transmission path.

It should be noted that the address of the message-initiating end is also the source address of the data packet. After the first communication node receives the check information notification message from the communication controller, it records the correspondence between the address of the message-initiating end, the address of the message-receiving end, the node address and the check information of the second communication node. Thus, based on the source address and the destination address carried in the data packet to be sent, which is also the address of the message-initiating end and the address of the message-receiving end, the first communication node acquires the corresponding check information from the recorded information and adds the node address and the check information of the second communication node to the data packet.

In one embodiment, the check information request is generated and sent by the transmission node $S_1'$. The communication controller then determines the transmission path for the data packet as routers $R_1$ and $R_2$ based on the address of the transmission node $S_1'$ and the address of the message-receiving end $S_2$, it sends the check information notification message containing the check information of the routers $R_1$ and $R_2$ to the transmission node $S_1'$. After receiving the check information notification message from the communication controller, the transmission node $S_1'$ records the addresses and the check information of the routers $R_1$ and $R_2$. When the message-initiating end sends the data packet to the message-receiving end $S_2$ via the transmission node $S_1'$, the transmission node $S_1'$ determines the corresponding transmission path as routers $R_1$ and $R_2$ based on the destination address of the data packet. Then, an outer packet header is added to the data packet, with the source address being the address of the transmission node $S_1'$ and the destination address being the address of router $R_1$. At the same time, the addresses and the check information of the routers $R_1$ and $R_2$ are added. The packet header of the data packet is as shown in Table 1:

Table 1

| |
| --- |
| Source address of outer packet header: address of transmission node $S_1'$<br>Destination address of outer packet header: address of router $R_1$ |
| Transmission path header:<br>Router $R_2$: address and check information<br>Router $R_1$: address and check information |
| Address of message-initiating end $S_1$<br>Address of message-receiving end $S_2$ |
| Payload |

After receiving the data packet, the router $R_1$ generates the check information and compares it with the check information corresponding to the router $R_1$ in the transmission path header of the data packet. If they are the same, the data packet is considered to pass the verification, and the destination address of the outer packet header is modified to the address of the router $R_2$, and the message is forwarded. After receiving the data packet, the router $R_2$ performs processing similar to that performed by the router $R_1$. If the verification is passed, it may choose to remove the outer packet header and send the data packet to the message-receiving end $S_2$.

It should be noted that the check information can be placed in the transmission path header, the outer packet header or the inner packet header, the IP address of the message-initiating end/message-receiving end, the option header or the original/newly defined extension header, etc.

It should also be noted that if the data packet does not carry the address of the second communication node, a strategy is sent to the second communication node through the communication controller to specify which data flows (e.g., a five-tuple or destination and source locations) should be checked or which data should not be checked, thereby achieving network security protection.

In some embodiments, the data packet is of the SRv6 SID type.

It should be noted that if the data packet is of the SRv6 SID type, the SID type is newly defined as check SID, which is used for the verification of the data packet, the check SID type can be expressed in an END.C.SID form. Wherein, the SID of the check SID type has an args part, an SRv6 node can take the args or part of the SID as the check information.

In an embodiment, the first communication node is a transmission node $S_1'$ and the check information carries the check information of the second communication node by a SRv6 policy. In the transmission of the data packet, the transmission node $A_1$ adds the check information to the data packet, the transmission path for the data packet is the router $R_1$, the router $R_2$ and the router $R_3$, wherein the router $R_1$ and the router $R_2$ have the capability of checking the SID and the router $R_3$ does not have the capability of checking the SID, the format of the data packet is as shown in Table 2:

Table 2

| |
| --- |
| Source address of outer packet header: address of transmission node $S_1'$<br>Destination address of outer packet header: address of router $R_1$ |
| SRH: |
| Router $R_3$: address<br>Router $R_2$: address and check information |

(continued)

| Router R$_1$: address and check information |
| --- |
| Address of message-initiating end S$_1$<br>Address of message-receiving end S$_2$ |
| Payload |

After receiving the data packet, the router R$_1$ generates the check information and compares it with the parameter portion of the SID of the router R$_1$ (i.e., the check message) in the data packet. If they are the same, the data packet is considered to pass the verification, and the destination address in the outer packet header is modified to the address of the router R$_2$, and the message is forwarded.

In one embodiment, the first communication node is the message-initiating end S$_1$ and the check information carries the check information of the second communication node by a SRv6 policy. During transmission of the data packet, the message-initiating end S$_1$ adds the check information to the data packet, and there may be one or more check SIDs, as well as a non-check SID in the SID list of the SRH of the data packet. After receiving the data packet, the second communication node determines that the SID of the node is a check SID, generates check information and compares it with the parameter portion (i.e., the check information) of the SID of the second communication node in the data packet, and if they are the same, the data packet is considered to pass the verification, and the destination address of the outer packet header is modified to the address of the next node, and the message is forwarded.

It should be appreciated that the message-initiating end and the message-receiving end may be terminals, PCs, servers, gateways, CPEs, managers or controllers, etc., and the transmission node and the second communication node may be routers, switches, gateways, etc.

An embodiment of the present application further provides a communication method, the method is applied to a first communication node, referring to FIG. 2, which is a flow diagram of a communication method provided by an embodiment of the present application, the communication method provided by an embodiment of the present application includes but is not limited to steps S210 to S230.

In Step S210, a check information notification message is received from a communication controller, the check information notification message including check information of at least one second communication node, the second communication node being a downstream communication node of the first communication node in a transmission path for a data packet.

In Step S220, the check information is added to the data packet.

In Step S230, the data packet added with the check information is sent to the second communication node, to cause the second communication node to verify the data packet according to the check information.

In some embodiments, prior to step S210, the method further includes:

a check information request is sent to a communication controller to cause the communication controller to return a check information notification message according to the check information request;

wherein the check information request includes a source address and a destination address of a data packet to be sent.

It should be understood that for the description of the communication method, steps, flow, and effects applied to the first communication node provided by the embodiments of the present application, please refer to the description of the communication method provided by the above embodiments, and it will not be repeated here.

An embodiment of the present application further provides a communication method, the method is applied to a second communication node, referring to FIG. 3, which is a flow diagram of a communication method provided by an embodiment of the present application, and as shown in FIG. 3, the communication method provided by an embodiment of the present application includes but is not limited to steps S310 to S330.

In Step S310, a data packet is received from a first communication node, the data packet carrying check information.

In Step S320, the data packet is verified according to the check information.

In Step S330, the data packet is forwarded in response to that the data packet passes the verification.

In some embodiments, prior to step S320, the method further includes:
node verification information is generated according to a source address and a destination address included in the data packet.

Step S320 includes:
the data packet is verified according to the node verification information and the check information.

It should be understood that for the description of the communication method, steps, flow, and effects applied to the second communication node provided by the embodiments of the present application, please refer to the description of the communication method provided by the above embodiments, and it will not be repeated here.

It should be noted that in the above embodiments, the description of each embodiment has emphasis, and for parts that are not elaborated or recorded in a certain embodiment, relevant descriptions in other embodiments can be referred to.

The communication method provided by the embodiments of the present application is described below by some embodiments:

Embodiment One

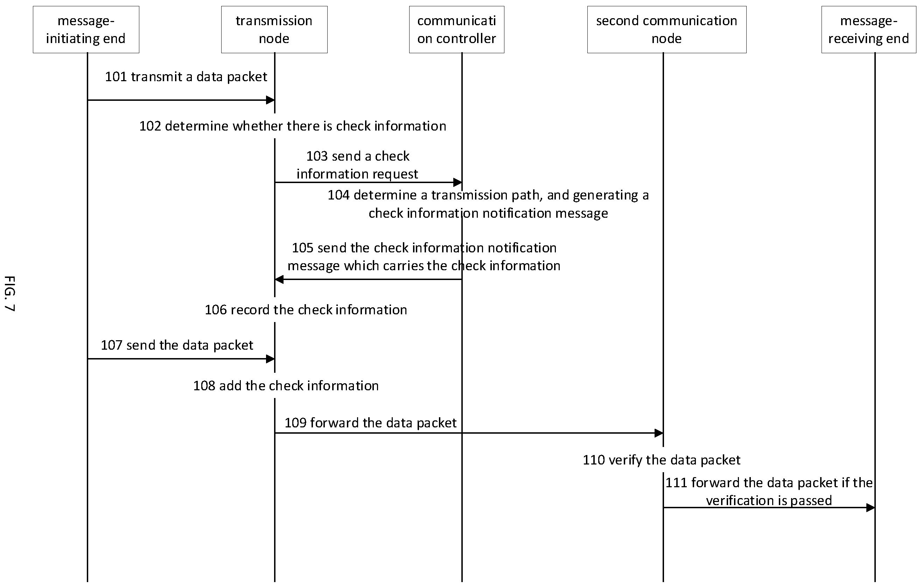

Please refer to FIG. 7, which is a flowchart of a communication method according to an embodiment of the present application, and as shown in FIG. 7, the communication method includes the following steps:

In Step 101, a message-initiating end sends a data packet to a message-receiving end via a transmission node;
In Step 102, the transmission node receives the data packet, determines whether there is corresponding check information locally for the data packet;
In Step 103, a check request is sent to the communication controller if the data packet has no corresponding check information locally;
In Step 104, the communication controller determines a transmission path, and determines a check information notification message according to the transmission path, wherein the check information notification message includes check information of at least one second communication node in the transmission path;
In Step 105, the communication controller sends the check information notification message to the transmission node;
In Step 106, the transmission node records the check information;
In Step 107, the message-initiating end sends the data packet to the message-receiving end via the transmission node;
In Step 108, the transmission node adds the check information to the data packet;
In Step 109, the data packet carrying the check information is forwarded to the second communication node;
In Step 110, the second communication node receives the data packet, and verifies the data packet according to the check information; and
In Step 111, if the verification is passed, the second communication node forwards the data packet.

Embodiment Two

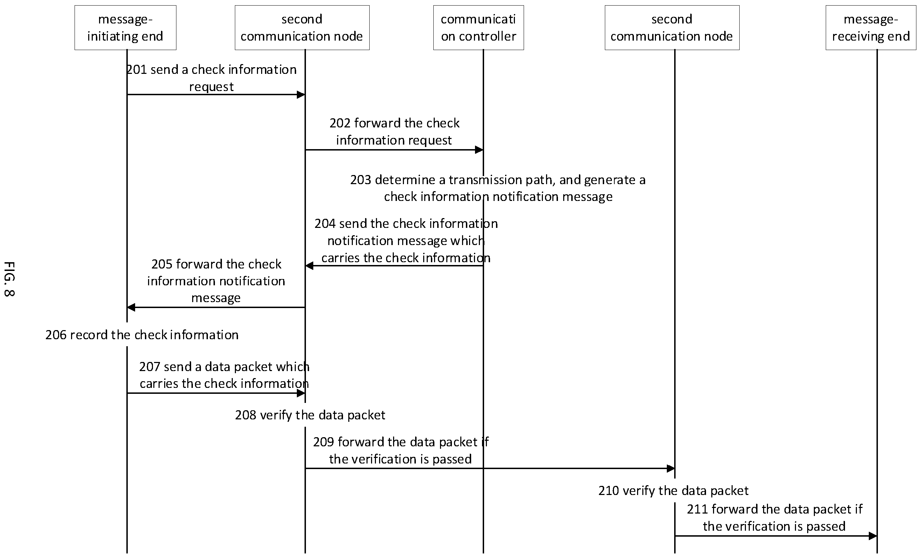

Please refer to FIG. 8, which is a flowchart of a communication method according to an embodiment of the present application, and as shown in FIG. 8, the communication method includes the following steps:

In Step 201, the message-initiating end sends a check information request to the message-receiving end via the second communication node;
In Step 202, the second communication node forwards the check information request;
In Step 203, the communication controller determines a transmission path, and determines a check information notification message according to the transmission path, wherein the check information notification message includes check information of at least one second communication node in the transmission path;
In Step 204, the communication controller sends the check information notification message to the message-initiating end;
In Step 205, the second communication node forwards the check information notification message;
In Step 206, the message-initiating end records the check information;
In Step 207, the message-initiating end sends a data packet carrying the check information;
Steps 208 to 209 and steps 210 to 211 are similar to steps 110 to 111 in Embodiment One, and will not be described in detail herein.

In an embodiment of the present application, the communication controller generates the check information notification message according to the transmission path for the data packet, and the check information notification message includes check information of at least one second communication node in the transmission path. The check information notification message is sent to the first communication node in the transmission path, such that the first communication node adds the check information to the data packet, after which the first communication node sends the data packet added with the check information to a downstream second communication node, such that the second communication node verifies the data packet based on the check information. In the present application, the check information of at least one second communication node in the transmission path is added into the data packet. In the data transmission process, the data packet is verified by the second communication node according to the check information, which can prevent malicious injection of unverified network traffic, achieve proactive defense against network attacks, and ensure network security.

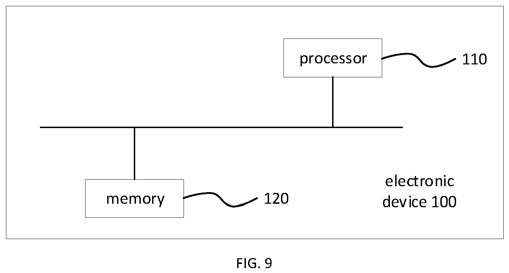

FIG. 9 is an electronic device 100 according to an embodiment of the present disclosure. As shown in FIG. 9, the electronic device 100 includes, but is not limited to:

a memory 120 for storing a program; and
a processor 110 for executing the program stored in the memory 120, and when the processor 110 executes the program stored in the memory 120, the processor 110 is configured to execute the communication method described above.

The processor 110 and the memory 120 may be connected by a bus or other means.

The memory 120 serves as a non-transitory computer-readable storage medium for storing non-transitory software programs and non-transitory computer-executable programs, such as the communication method described in any of the embodiments herein. The processor 110 implements the communication method described above by executing non-transitory software programs and instructions stored in the memory 120.

The memory 120 may include a stored program area and a stored data area, wherein the stored program area may store an operating system, an application program required for at least one function; the storage data area may store a communication method that performs the above. In addition, the memory 120 may include a high-speed random access memory, and may also include a non-transitory memory, such as at least one magnetic disk storage device, a flash memory device, or other non-transitory solid-state memory device. In some embodiments, the memory 120 may include a memory remotely located with respect to the processor 110, which may be connected to the processor 110 via a network. Examples of such networks include, but are not limited to, the Internet, an intranet, a local area network, a mobile communications network, and combinations thereof.

The non-transitory software programs and instructions necessary to implement the communication method described above are stored in the memory 120 and, when executed by the one or more processors 110, perform the communication method described in any of the embodiments herein.

An embodiment of the present application further provides a storage medium which stores computer-executable instructions, and the computer-executable instructions are configured to perform the communication method described above.

In one embodiment, the storage medium stores computer-executable instructions that are executed by one or more control processors, such as the one or more processors of the electronic device, to cause the one or more processors to perform the communication method provided by any embodiment of the present application.

In an embodiment of the present application, the communication controller generates the check information notification message according to the transmission path for the data packet, and the check information notification message includes check information of at least one second communication node in the transmission path. The check information notification message is sent to the first communication node in the transmission path, such that the first communication node adds the check information to the data packet, after which the first communication node sends the data packet added with the check information to a downstream second communication node, such that the second communication node verifies the data packet based on the check information. In the present application, the check information of at least one second communication node in the transmission path is added into the data packet. In the data transmission process, the data packet is verified by the second communication node according to the check information, which can prevent malicious injection of unverified network traffic, achieve proactive defense against network attacks, and ensure network security.

The embodiments described above are merely schematic, wherein the units illustrated as separate components may or may not be physically separated, i.e. may be located in one place, or may also be distributed over a plurality of network elements. Some or all of the modules may be selected according to actual needs to achieve the object of the embodiment.

In addition, each functional unit in each embodiment of the present application may be integrated into one processing unit, each unit may be physically present individually, or two or more units may be integrated into one unit. The integrated unit may be implemented in hardware or in a hardware plus software functional unit.

It will be appreciated by those of ordinary skill in the art that all or some of the steps in the methods disclosed above, and the system may be implemented as software, firmware, hardware, and appropriate combinations thereof. Some or all of the physical components may be implemented as software executed by a processor, such as a central processing unit, digital signal processor or microprocessor, or as hardware, or as an integrated circuit, such as an application specific integrated circuit. Such software may be distributed on computer readable media, which may include computer storage media (or non-transitory media) and communication media (or transitory media). As is well known to those of ordinary skill in the art, the term, computer storage medium, includes volatile and nonvolatile, removable and non-removable media implemented in any method or technology for storage of information such as computer readable instructions, data structures, program modules or other data. Computer storage media include, but are not limited to, RAM, ROM, EEPROM, flash memory or other memory technology, CD-ROM, digital versatile disk (DVD) or other optical disk storage, magnetic cassette, magnetic tape, magnetic disk storage or other magnetic storage devices, or any other medium which can be used to store the desired information and which can accessed by a computer. Further, it is well known to those of ordinary skill in the art that communication media typically includes computer readable instructions, data structures, program modules, or other data in a modulated data signal such as a carrier wave or other transport mechanism and can include any information delivery medium.

**Claims**

1. A communication method applied to a communication controller, comprising:

   generating a check information notification message according to a transmission path for a data packet, wherein the check information notification message comprises check information of at least one second communication node in the transmission path; and
   sending the check information notification message to a first communication node in the transmission path, such that the first communication node adds the check information to the data packet;
   wherein the first communication node is an upstream communication node of the second communication node, and the check information is used by the second communication node to verify the data packet from the first communication node.

2. The communication method according to claim 1, wherein prior to the generating the check information notification message according to the transmission path for the data packet, the method further comprises:

   receiving a check information request from a first communication node; and
   determining a transmission path for a data packet according to a source address and a destination address comprised in the check information request.

3. The communication method according to claim 2, wherein prior to determining the transmission path for the data packet according to the source address and the destination address comprised in the check information request, the method further comprises:

   receiving node information from a second communication node; and
   the determining the transmission path for the data packet according to the source address and the destination address comprised in the check information request comprises:

      determining a transmission path for a data packet based on the node information and a source address and a destination address comprised in the check information request;
      wherein the node information comprises a node link state and whether a verification function is supported.

4. The communication method according to claim 3, wherein the node information further comprises a node port, and the generating the check information notification message according to the transmission path for the data packet comprises:
   generating a check information notification message according to the node port and the transmission path for the data packet.

5. The communication method according to claim 1, **characterized in that** the method further comprises:
   determining a network location of the second communication node according to a service requirement of the data packet.

6. A communication method applied to a first communication node, comprising:

   receiving a check information notification message from a communication controller, the check information notification message comprising check information of at least one second communication node, the second communication node being a downstream communication node of the first communication node in a transmission path for a data packet;

adding the check information to the data packet; and
sending the data packet added with the check information to the second communication node, to cause the second communication node to verify the data packet according to the check information.

7. The communication method according to claim 6, wherein prior to the receiving the check information notification message from the communication controller, the method further comprises:

sending a check information request to a communication controller to cause the communication controller to return a check information notification message according to the check information request;
wherein the check information request comprises a source address and a destination address of a data packet to be sent.

8. A communication method applied to a second communication node, comprising:

receiving a data packet from a first communication node, the data packet carrying check information;
verifying the data packet according to the check information; and
forwarding the data packet in response to that the data packet passes the verification.

9. The communication method according to claim 8, wherein prior to the verifying the data packet according to the check information, the method comprises:

generating node verification information according to a source address and a destination address comprised in the data packet;
the verifying the data packet according to the check information comprises:
verifying the data packet according to the node verification information and the check information.

10. An electronic device, comprising:

a memory for storing a program; and
a processor for executing the program stored in the memory, the processor executing the communication method according to any one of claims 1 to 9 when the processor executes the program stored in the memory.

11. A storage medium, comprising computer-executable instructions stored thereon for executing the communication method according to any one of claims 1 to 9.

| generate a check information notification message according to a transmission path for a data packet, wherein the check information notification message includes check information of at least one second communication node in the transmission path | S110 |
|---|---|

| send the check information notification message to a first communication node in the transmission path, such that the first communication node adds the check information to the data packet | S120 |
|---|---|

FIG. 1

| receive a check information notification message from a communication controller, the check information notification message including check information of at least one second communication node | S210 |
|---|---|

| add the check information to the data packet | S220 |
|---|---|

| send the data packet added with the check information to the second communication node, to cause the second communication node to verify the data packet according to the check information | S230 |
|---|---|

FIG. 2

| receive a data packet from a first communication node, the data packet carrying check information | S310 |

↓

| verify the data packet according to the check information | S320 |

↓

| forward the data packet in response to that the data packet passes the verification | S330 |

FIG. 3

communication controller

| first communication node | second communication node | - - - - | second communication node | message-receiving end |

FIG. 4

FIG. 5

FIG. 6

FIG. 7

| message-initiating end | second communication node | communication controller | second communication node | message-receiving end |

201 send a check information request

202 forward the check information request

203 determine a transmission path, and generate a check information notification message

204 send the check information notification message which carries the check information

205 forward the check information notification message

206 record the check information

207 send a data packet which carries the check information

208 verify the data packet

209 forward the data packet if the verification is passed

210 verify the data packet

211 forward the data packet if the verification is passed

FIG. 8

FIG. 9

## INTERNATIONAL SEARCH REPORT

International application No.

**PCT/CN2023/098611**

### A. CLASSIFICATION OF SUBJECT MATTER

H04L 9/40(2022.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, CNKI, VEN, CNABS: 验证, 校正, 校验, 码, 节点, 地址, 上游, 下游, 目的, 路径, 源, 转发, 过滤, 丢弃, 头, SRH, SRv6, IPV4, IPV6, verify, correct, check, code, node, address, upstream, downstream, destination, path, source, forward, filter, discard, head

### C. DOCUMENTS CONSIDERED TO BE RELEVANT

| Category* | Citation of document, with indication, where appropriate, of the relevant passages | Relevant to claim No. |
|---|---|---|
| X | CN 111726368 A (TSINGHUA UNIVERSITY) 29 September 2020 (2020-09-29) description, paragraphs [0035]-[0068], and figures 1-3 | 1-11 |
| X | CN 113691490 A (HUAWEI TECHNOLOGIES CO., LTD.) 23 November 2021 (2021-11-23) description, paragraphs [0087]-[0235] | 1-11 |
| A | CN 111585890 A (TSINGHUA UNIVERSITY) 25 August 2020 (2020-08-25) entire document | 1-11 |
| A | WO 2021197003 A1 (HUAWEI TECHNOLOGIES CO., LTD.) 07 October 2021 (2021-10-07) entire document | 1-11 |
| A | US 2019036818 A1 (CISCO TECHNOLOGY, INC.) 31 January 2019 (2019-01-31) entire document | 1-11 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 July 2023** | **21 July 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/098611**

| Patent document cited in search report | | | Publication date (day/month/year) | Patent family member(s) | | | Publication date (day/month/year) |
|---|---|---|---|---|---|---|---|
| CN | 111726368 | A | 29 September 2020 | None | | | |
| CN | 113691490 | A | 23 November 2021 | WO | 2021232896 | A1 | 25 November 2021 |
| | | | | EP | 4145790 | A1 | 08 March 2023 |
| | | | | US | 2023102984 | A1 | 30 March 2023 |
| CN | 111585890 | A | 25 August 2020 | None | | | |
| WO | 2021197003 | A1 | 07 October 2021 | US | 2023044321 | A1 | 09 February 2023 |
| | | | | EP | 4117227 | A1 | 11 January 2023 |
| | | | | JP | 2023521022 | A | 23 May 2023 |
| | | | | CN | 113497800 | A | 12 October 2021 |
| US | 2019036818 | A1 | 31 January 2019 | US | 2020007446 | A1 | 02 January 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210810455